# EUROPEAN PATENT APPLICATION

(11) **EP 4 606 831 A1**
(43) Date of publication of application: **27.08.2025**
(21) Application number: 24159374.8
(22) Date of filing: 23.02.2024
(51) Int. Cl.: C08G 18/12, C08G 18/38, C08G 18/48, C08G 18/76, C08K 3/04, C09J 175/04, C09J 175/08, C08G 18/22, C08G 18/78, C08G 18/79, C08K 3/26

(54) **FAST-CURING TWO-COMPONENT POLYURETHANE COMPOSITION WITH LONG POT LIFE**

(71) Applicant: Sika Technology AG, 6340 Baar (CH)
(72) Inventor: SATO, Hiroki, Hiratsuka, 254-0014 (JP); CORSARO, Antonio, 8105 Regensdorf (CH); MATSUKI, Yuichi, Hiratsuka, 254-0014 (JP)
(74) Representative: Sika Patent Attorneys

(57) **Abstract**

The present invention relates to a polyurethane composition consisting of a first component **A** and a second component **B,** wherein the first component **A** comprises at least one polyol **A1** having an average OH functionality of more than 2 and a number average molecular weight Mₙ in the range from 250 to 15'000 g/mol; and at least one compound **T** that has at least one thiol group; and the second component **B** comprises at least one polyisocyanate **I**; wherein one of the two components additionally comprises at least one metal catalyst **K** for the reaction of hydroxyl groups and isocyanate groups that is able to form thio complexes; and the molar ratio of all the thiol groups in the at least one compound **T** to all metal atoms in the at least one metal catalyst **K** is between 1:1 and 250:1; characterized in that compound **T** comprises or consists of a compound having only one thiol group; and polyisocyanate I comprises a polyurethane polymer **PU** containing isocyanate groups; and component **B** exhibits a total isocyanate content of between 100 and 400 mmol NCO per kilogram of component **B.**

Such a composition cures very rapidly to form a mechanically excellent mass suitable as structural adhesive or semi-structural elastic adhesive, but at the same time exhibits an adequately long pot life allowing it to be handled comfortably and that can be formulated with a very low isocyanate content, especially a very low content of monomeric diisocyanates.

## Description

### Technical field

The invention relates to the field of two-component polyurethane compositions and to the use thereof, in particular as adhesives for industrial assembly and direct glazing, and a process for bonding a first substrate to a second substrate using this two-component compositions and a bonded article obtained by this process.

### State of the art

Two-component polyurethane compositions based on polyols and polyisocyanates have already been used for a long time. Two-component polyurethane compositions that cure by reaction of isocyanate (NCO) groups with hydroxyls from polyols have the advantage over one-component compositions that they cure rapidly after mixing and can therefore absorb and transmit higher forces after just a short time. For use as structural adhesives or semi-structural elastic adhesives, such compositions must meet high demands as regards strength and adhesive forces since such adhesives are elements of load-bearing structures. In particular, such compositions when cured need to have good mechanical properties such as high tensile shear strength but must not be brittle at the same time. It is moreover desirable, for example in industrial manufacturing, for such compositions to cure as rapidly as possible, which reduces throughput or production cycle times.

In order to achieve the desired mechanical properties and above all particularly rapid curing, it is normally advantageous when such compositions contain high proportions of isocyanates that are present in one of the two components in the form of free or polymer-bound polyisocyanates and that, after mixing with the other component, which contains polyols, cure to form a polymeric network. A high content of isocyanates does however lead to problems. Particularly with the use of crosslinking catalysts, which is essential for selective, optimal crosslinking and curing, such two-component systems become almost uncontrollably fast and pot lives much too short for use, for example, as a structural adhesive.

For the use of two-component polyurethane compositions, it is generally desirable if an adequately long pot life can be combined with subsequently very rapid curing and extremely rapid development of strength. However, this is hardly achievable with common two-component compositions. Either the pot life is very short in the case of compositions that cure and develop strength rapidly or else curing and the development of strength are slow when handling compositions that have a long pot life.

Two-component polyurethane compositions have therefore been developed that have a long pot life which can even be adjusted within certain limits, thus allowing larger components or production parts to processed too, but that after application also cure very rapidly and exhibit strength and elasticity, in the sense of structural bonding, within an extremely short time, for example less than an hour up to a at most a few days. One such two-component polyurethane composition is disclosed in WO 2019/002538 A1. This publication teaches special catalyst systems comprising a metal catalyst and compounds containing thiol groups, which allow an adjustable, long pot life and then very rapid curing of the composition.

A similar two-component polyurethane composition comprising such a catalyst system is disclosed in US 5 587 448 A. The two-component polyurethane compositions taught therein are mostly based on various polypropylene glycol-based polyether polyols and are particularly suitable as coatings.

Another example of a two-component polyurethane composition using this curing catalysis is disclosed in WO 2021/191045 A1. Therein, the polyurethane composition is partially based on hydrophobic polyols such as polybutadienes, which requires a careful adjustment of the used polyol mixture.

However, the compositions known that employ this catalytic approach leading to a long pot life and fast curing generally require a high NCO content in order to enable these effects. This is commonly achieved by using significant amounts of diisocyanate monomers such as 4,4'-diphenylmethane diisocyanate (4,4'-MDI) as isocyanate component. Due to EHS concerns, use of such monomeric diisocyanates has become more limited recently, and legislation requires more and more safety measures. For example, the European Union under Regulation 1907/2206 introduced a REACH Restriction for diisocyanates (such as MDI) requiring special labelling and handling precautions for chemical products, such as adhesives, that contain ≥ 0.1% of monomeric diisocyanate.

It is possible to formulate two-component polyurethane compositions with very low content or even virtually free of monomeric diisocyanates. For this approach, the isocyanate (hardener) component may contain, instead of monomeric diisocyanates, polyurethane polymers having isocyanate groups and optionally oligomeric polyisocyanates such as polyisocyanurates, biurets, or allophanates. However, such two-component compositions based on NCO-functional polyurethane polymers as hardener component cannot be easily formulated in a way such that the combination of long pot life and fast curing properties as taught in WO 2019/002538 A1 can be achieved.

For certain applications, such as industrial or automotive assembly operations, for example direct glazing processes in automotive manufacturing, it necessary that the used two-component adhesives possess a long pot life for adequate handling, for example between 4 and 7 minutes, but after application cure so fast that the assembled part or object can be moved within short time (for example 10 to 20 min for handling and 30 to 60 min for assembly) without risking dislocation of the bonded part or even loss of the adhesive bond. So far, this could only be achieved with two-component polyurethane compositions having a high content of NCO groups, which is the case when monomeric diisocyanates are used as hardener.

It would therefore be desirable to obtain a two-component polyurethane composition that is based on polymers having isocyanate groups as hardener and preferably has a low content of monomeric diisocyanates, and that contains a catalyst system enabling a long pot life, for example between 4 and 7 min, and subsequently and extremely rapid curing, for example expressed by a tensile shear strength, measured according to DIN EN 1465, after 10 to 20 min of curing of at least 0.1 MPa and after 30 to 60 min of curing of at least 2.0 MPa.

### Summary of the invention

The object of the present invention is therefore to provide a two-component polyurethane composition based on isocyanate-functional polymers as hardener that cures very rapidly to form a mechanically excellent mass suitable as structural adhesive or semi-structural elastic adhesive, but at the same time exhibits an adequately long pot life allowing it to be handled comfortably and that can be formulated with a very low isocyanate content, especially a very low content of monomeric diisocyanates.

This object is surprisingly achieved with the polyurethane composition of the invention as claimed in claim 1. It comprises a polyol component containing at least one polyol with an average OH-functionality of more than 2 and a compound having at least one thiol group in the first component and a polyisocyanate in the second component, wherein the compound having at least one thiol group must comprise or consist of a compound having only one thiol group, and wherein the polyisocyanate must comprise a polyurethane polymer having isocyanate groups, and wherein the hardener component must exhibit a total isocyanate content of between 100 and 400 mmol NCO per kilogram of the hardener component.

For curing the composition, the composition further contains a metal catalyst that is able to form thio complexes, the ratio of thiol groups to metal atoms in the composition being fixed. The composition has very high tensile shear strength when cured, which builds up very rapidly. After mixing the components and after an adequately long pot life it cures very fast and achieves very good mechanical values after just a short time.

Further aspects of the invention are the subject of further independent claims. Particularly preferred embodiments of the invention are the subject of the dependent claims.

### Ways of executing the invention

The present invention relates in a first aspect to a polyurethane composition consisting of a first and a second component; wherein
- the first component **A** comprises
   - at least one polyol **A1** having an average OH functionality of more than 2, preferably in the range from 3 to 6, and a number average molecular weight Mₙ in the range from 250 to 15'000 g/mol; and
   - at least one compound **T** that has at least one thiol group; and
- the second component **B** comprises
   - at least one polyisocyanate **I**;

wherein one of the two components additionally comprises at least one metal catalyst **K** for the reaction of hydroxyl groups and isocyanate groups that is able to form thio complexes; and
the molar ratio of all the thiol groups in the at least one compound **T** to all metal atoms in the at least one metal catalyst **K** is between 1:1 and 250:1 ;
characterized in that
compound **T** comprises or consists of a compound having only one thiol group; and
polyisocyanate **I** comprises a polyurethane polymer **PU** containing isocyanate groups; and
component **B** exhibits a total isocyanate content of between 100 and 400 mmol NCO per kilogram of component **B.**

The prefix "poly" in substance names such as "polyol", "polyisocyanate", "polyether" or "polyamine" in the present document indicates that the respective substance formally contains more than one of the functional groups that occurs in its name per molecule.

The term "polymer" in the present document firstly encompasses a collective of macromolecules that are chemically uniform but differ in the degree of polymerization, molar mass, and chain length, said collective having been produced by a "poly" reaction (polymerization, polyaddition, polycondensation). The term secondly also encompasses derivatives of such a collective of macromolecules from "poly" reactions, i.e., compounds obtained by reactions, for example additions or substitutions, of functional groups on defined macromolecules and that may be chemically uniform or chemically nonuniform. The term further encompasses so-called prepolymers too, i.e., reactive oligomeric initial adducts, the functional groups of which are involved in the formation of macromolecules.

The term "polyurethane polymer" encompasses all polymers produced according to the so-called diisocyanate polyaddition process. This also includes polymers that are virtually or completely free of urethane groups. Examples of polyurethane polymers are polyether polyurethanes, polyester polyurethanes, polyether polyureas, polyureas, polyester polyureas, polyisocyanurates, and polycarbodiimides.

"Molecular weight" is in the present document understood to mean the molar mass (in grams per mole) of a molecule or a molecule residue. "Average molecular weight" refers to the number average Mₙ of a polydisperse mixture of oligomeric or polymeric molecules or molecule residues, which is typically determined by gel-permeation chromatography (GPC) against polystyrene as standard.

Percent by weight values, abbreviated to % by weight, refer to the proportions by mass of a constituent in a composition based on the overall composition, unless otherwise stated. The terms "mass" and "weight" are used synonymously in the present document.

A "primary hydroxyl group" refers to an OH group attached to a carbon atom having two hydrogens.

"Pot life" refers in this document to the time within which, after mixing the two components, the polyurethane composition can be processed before the viscosity resulting from the progression of the crosslinking reaction has become too high for further processing.

"Room temperature" in the present document refers to a temperature of 20°C. A substance or a composition is described as "storage-stable" or "storable" if it can be stored at room temperature in a suitable container for a relatively long period, typically at least 3 months up to 6 months or longer, without this storage resulting in any change in its application or use properties, especially in the viscosity and crosslinking rate, to an extent relevant to the use thereof.

All industry standards and norms mentioned in this document relate to the versions valid at the date of first filing.

The "average OH functionality" is the number of OH groups per polyol molecule, averaged over all the polyol molecules. If, for example, 50% of all polymer molecules contain two hydroxyl groups and the other 50% contain three, the result is an average OH functionality of 2.5. The average OH functionality can in particular be determined by calculation from the hydroxyl value and the molecular weight Mₙ determined via GPC.

The polyurethane composition of the invention consists of a first component **A** and a second component **B,** which are mixed only on application of the polyurethane composition and are stored prior to this in separate packagings.

The first component **A** comprises
- at least one polyol **A1** having an average OH functionality of more than 2, preferably in the range from 3 to 6, and a number average molecular weight Mₙ in the range from 250 to 15'000 g/mol; and
- at least one compound **T** that has at least one thiol group.

### Polyol A1

The first component **A** contains at least one polyol **A1** having an average OH functionality of more than 2, preferably in the range from 3 to 6, and a number average molecular weight Mₙ in the range from 250 to 15'000 g/mol, preferably in the range from 250 to 10'000 g/mol, in particular in the range from 250 to 2'500 g/mol.

Preferably, component **A** contains between 30% by weight and 90% by weight, preferably between 50% by weight and 85% by weight, in particular between 60% by weight and 80% by weight, of polyol **A1,** based on component **A.**

Polyol **A1** may be and preferably is a mixture of different polyols. The average OH functionality and average molecular weight Mₙ accordingly may refer to the overall OH functionality and overall molecular weight Mₙ of a mixture of different polyols, whereby the mixture must satisfy these requirements.

Suitable polyols **A1** are in principle all polyols currently used in the production of polyurethane polymers. Particularly suitable are polyether polyols, polyester polyols, poly(meth)acrylate polyols, polybutadiene polyols, polycarbonate polyols, and also mixtures of these polyols.

Suitable polyether polyols, also known as polyoxyalkylene polyols or oligoetherols, are in particular those that are polymerization products of ethylene oxide, 1,2-propylene oxide, 1,2- or 2,3-butylene oxide, oxetane, tetrahydrofuran or mixtures thereof, optionally polymerized with the aid of a starter molecule having two or more active hydrogen atoms such as water, ammonia or compounds having a plurality of OH or NH groups, for example 1,2-ethanediol, 1,2- and 1,3-propanediol, neopentyl glycol, diethylene glycol, triethylene glycol, the isomeric dipropylene glycols and tripropylene glycols, the isomeric butanediols, pentanediols, hexanediols, heptanediols, octanediols, nonanediols, decanediols, undecanediols, 1,3- and 1,4-cyclohexanedimethanol, bisphenol A, hydrogenated bisphenol A, 1,1,1-trimethylolethane, 1,1,1-trimethylolpropane, glycerol, aniline, and mixtures of the recited compounds. Employable are both polyoxyalkylene polyols having a low degree of unsaturation (measured according to ASTM D-2849-69 and expressed in milliequivalents of unsaturation per gram of polyol (mEq/g)), produced for example using so-called double metal cyanide complex catalysts (DMC catalysts), and polyoxyalkylene polyols having a relatively high degree of unsaturation, produced for example using anionic catalysts such as NaOH, KOH, CsOH or alkali metal alkoxides.

Particularly suitable are polyoxyethylene polyols and polyoxypropylene polyols, in particular polyoxyethylene diols, polyoxypropylene diols, polyoxyethylene triols, and polyoxypropylene triols.

Particularly suitable are polyoxyalkylene diols or polyoxyalkylene triols having a degree of unsaturation lower than 0.02 mEq/g and having a molecular weight Mₙ in the range from 1000 to 15'000 g/mol, as are polyoxyethylene diols, polyoxyethylene triols, polyoxypropylene diols and polyoxypropylene triols having a molecular weight of 400 to 15 000 g/mol.

Likewise particularly suitable and preferred are so-called ethylene oxide-terminated (EO-endcapped/ethylene oxide-endcapped) polyoxypropylene polyols. The latter are special polyoxypropylene polyoxyethylene polyols that are obtained for example when pure polyoxypropylene polyols, in particular polyoxypropylene diols and triols, after completion of the polypropoxylation reaction, are further alkoxylated with ethylene oxide and thus have primary hydroxyl groups. Preferred in this case are polyoxypropylene polyoxyethylene diols and polyoxypropylene polyoxyethylene triols.

Also suitable are hydroxyl-terminated polybutadiene polyols, for example those produced by polymerization of 1,3-butadiene and allyl alcohol or by oxidation of polybutadiene and also the hydrogenation products thereof.

Also suitable are styrene-acrylonitrile grafted polyether polyols such as those commercially available under the trade name Lupranol^{®} from Elastogran GmbH, Germany.

Suitable polyester polyols include in particular polyesters that bear at least two hydroxyl groups and are produced by known processes, in particular polycondensation of hydroxycarboxylic acids or polycondensation of aliphatic and/or aromatic polycarboxylic acids with dihydric or polyhydric alcohols. More suitable are polyester polyols produced from dihydric to trihydric alcohols such as 1,2-ethanediol, diethylene glycol, 1,2-propanediol, dipropylene glycol, 1,4-butanediol, 1,5-pentanediol, 1,6-hexanediol, neopentyl glycol, glycerol, 1,1,1-trimethylolpropane or mixtures of the abovementioned alcohols with organic dicarboxylic acids or the anhydrides or esters thereof, for example succinic acid, glutaric acid, adipic acid, trimethyladipic acid, suberic acid, azelaic acid, sebacic acid, dodecanedicarboxylic acid, maleic acid, fumaric acid, dimer fatty acid, phthalic acid, phthalic anhydride, isophthalic acid, terephthalic acid, dimethyl terephthalate, hexahydrophthalic acid, trimellitic acid and trimellitic anhydride or mixtures of the abovementioned acids, as are polyester polyols formed from lactones such as ε-caprolactone. Particularly suitable are polyester diols, in particular those produced from adipic acid, azelaic acid, sebacic acid, dodecanedicarboxylic acid, dimer fatty acid, phthalic acid, isophthalic acid and terephthalic acid as the dicarboxylic acid or from lactones such as ε-caprolactone and from ethylene glycol, diethylene glycol, neopentyl glycol, 1,4-butanediol, 1,6-hexanediol, dimer fatty acid diol, and 1,4-cyclohexanedimethanol as the dihydric alcohol.

Suitable polycarbonate polyols include in particular those obtainable by reaction for example of the abovementioned alcohols used to construct the polyester polyols with dialkyl carbonates such as dimethyl carbonate, diaryl carbonates such as diphenyl carbonate, or phosgene. Likewise suitable are polycarbonates obtainable from the copolymerization of CO₂ with epoxides such as ethylene oxide and propylene oxide. Polycarbonate diols, in particular amorphous polycarbonate diols, are particularly suitable.

Further suitable polyols are poly(meth)acrylate polyols.

Also suitable are polyhydroxy-functional fats and oils, for example natural fats and oils, in particular castor oil, or so-called oleochemical polyols obtained by chemical modification of natural fats and oils, the epoxy polyesters or epoxy polyethers obtained for example by epoxidation of unsaturated oils and subsequent ring opening with carboxylic acids or alcohols respectively, or polyols obtained by hydroformylation and hydrogenation of unsaturated oils. Also suitable are polyols obtained from natural fats and oils by degradation processes such as alcoholysis or ozonolysis and subsequent chemical linking, for example by transesterification or dimerization, of the thus obtained degradation products or derivatives thereof. Suitable degradation products of natural fats and oils are in particular fatty acids and fatty alcohols and also fatty acid esters, in particular the methyl esters (FAME), which can be derivatized to hydroxy fatty acid esters, for example by hydroformylation and hydrogenation.

Likewise suitable are, in addition, polyhydrocarbon polyols, also referred to as oligohydrocarbonols, for example polyhydroxy-functional ethylene-propylene, ethylene-butylene or ethylene-propylene-diene copolymers, for example those produced by Kraton Polymers, USA, or polyhydroxy-functional copolymers of dienes, such as 1,3-butanediene or diene mixtures, and vinyl monomers such as styrene, acrylonitrile or isobutylene, or polyhydroxy-functional polybutadiene polyols, for example those which are produced by copolymerization of 1,3-butadiene and allyl alcohol and which may also be hydrogenated.

Also suitable are polyhydroxy-functional acrylonitrile/butadiene copolymers, such as those that can be produced from epoxides or amino alcohols and carboxyl-terminated acrylonitrile/butadiene copolymers, which are commercially available under the name Hypro^{®} (formerly Hycar^{®}) CTBN from Emerald Performance Materials, LLC, USA.

All recited polyols preferably have an average molecular weight Mₙ from 250 to 15'000 g/mol, preferably from 250 to 10'000 g/mol, more preferably from 250 to 2'500 g/mol and preferably an average OH functionality in the range from 2 to 6, preferably 3 to 6. However, it is entirely possible for the composition to also include proportions of monools (polymers having only one hydroxyl group), as long as the overall properties of the polyol **A1** satisfies the defined ranges.

Particularly suitable polyols **A1** are polyester polyols and polyether polyols, in particular polyoxyethylene polyols, polyoxypropylene polyols, and polyoxypropylene polyoxyethylene polyols, preferably polyoxyethylene diols, polyoxypropylene diols, polyoxyethylene triols, polyoxypropylene triols, polyoxypropylene polyoxyethylene diols, and polyoxypropylene polyoxyethylene triols.

Furthermore particularly suitable and preferred are ethoxylated, meaning ethylene oxide-terminated (EO-endcapped/ethylene oxide-endcapped), small molecule polyols such as ethoxylated pentaerythritol, ethoxylated trimethyolpropane, and ethoxylated dipentaerythritol.

Accordingly, in preferred embodiments polyol **A1** comprises at least one polyether polyol, in particular at least one ethylene glycol-terminated polyether polyol.

In the same or further preferred embodiments, said polyol **A1** is a mixture of a first polyol **A1a** having an average OH-functionality of between 2 and 3 and a second polyol **A1b** having an average OH-functionality of more than 3, wherein the weight ratio of polyol **A1a** to polyol **A1b** is in the range of 10:1 to 2:1, preferably 9:1 to 3:1.

Preferably, said polyol **A1a** has a number average molecular weight Mₙ in the range from 2'500 to 10'000 g/mol, and said polyol **A1b** has a number average molecular weight Mₙ in the range from 250 to 1'000 g/mol.

In addition to these recited polyols **A1,** it is possible to include small amounts of further low-molecular-weight dihydric or polyhydric alcohols such as diethylene glycol, triethylene glycol, the isomeric dipropylene glycols and tripropylene glycols, the isomeric decanediols and undecanediols, hydrogenated bisphenol A, dimer fatty alcohols, 1,1,1-trimethylolethane, 1,1,1-trimethylolpropane, glycerol, pentaerythritol, sugar alcohols such as xylitol, sorbitol or mannitol, sugars such as sucrose, other higher polyhydric alcohols, low-molecular-weight alkoxylation products of the abovementioned dihydric and polyhydric alcohols, and also mixtures of the abovementioned alcohols. In addition, polyols containing other heteroatoms, for example methyldiethanolamine or thiodiglycol, may also be present.

Furthermore, it might be advantageous that small amounts of water are added to component **A,** for example between 0.5 % by weight and 2.5 % by weight, preferably between 1% by weight and 2% by weight, based on component **A.** Water may add the advantage that the content of active hydrogen within the polyol component **A** may be adjusted easily to any given NCO content of a component **B,** thus avoiding excess NCO during and after curing without having to re-formulate the polyol composition completely.

### Compound T having at least one thiol group

The first component **A** further comprises at least one compound **T** that has at least one thiol group, with the provisio that compound **T** comprises or consists of a compound having only one thiol group. Suitable are all compounds having at least one thiol or mercapto group that are able to be formulated into the composition of the invention. A thiol group is understood here as meaning an - SH group that is attached to an organic radical, for example an aliphatic, cycloaliphatic or aromatic carbon radical.

Preference is given to compounds having 1 to 6, especially 1 to 4, most preferably 1 or 2 thiol groups, while however at least partially a compound having only 1 thiol groups must be comprised. It has been found, surprisingly, that compound **T** must at least partially include a monothiol compound, i.e., a compound having only one thiol group, within compound **T.** Thus, compound **T** may consist of at least one monothiol compound, which is preferred, or it may comprise at least one monothiol compound and furthermore at least one polythiol compound, i.e., a compound having more than one thiol groups. In preferred embodiments, compound **T** consists of compounds having only one thiol group. In other preferred embodiments, compound **T** comprises at least 50 % by weight, in particular at least 75 % by weight, compounds having only one thiol group, based on the total compound **T** within component **A.**

Examples of suitable compounds having one thiol group are 3-mercaptopropyltrimethoxysilane, 3-mercaptopropyltriethoxysilane, 3-mercaptopropane-1,2-diol, 2-mercaptotoluimidazole or 2-mercaptobenzothiazole, aliphatic monothiols, in particular 1-decanthiol and 1-dodecanthiol, and 3-mercaptopropionic acid alkyl esters and thioglycolic acid alkyl esters, in particular 2-ethylhexyl thioglycolate, 2-ethylhexyl-3-mercaptopropionate, and isooctyl thioglycolate.

Examples of suitable compounds having more than one thiol group are ethylene glycol di(3-mercaptopropionate), ethylene glycol dimercaptoacetate, dipentaerythritol hexa(3-mercaptopropionate), 2,3-dimercapto-1,3,4-thiadiazole or pentaerythritol tetrakis(3-mercaptopropionate).

The compound **T** is preferably selected from the group consisting of ethylene glycol di(3-mercaptopropionate), ethylene glycol dimercaptoacetate, dipentaerythritol hexa(3-mercaptopropionate), and 3-mercaptopropyl trimethoxysilane.

In preferred embodiments, the at least one compound **T** is selected from alkyl monothiols and/or monothiol compounds having a carboxylic ester group, and preferably consists of such compounds. Such compounds allow for especially long pot life and especially fast curing.

In the same or other preferred embodiments, the at least one compound **T** does neither contain ether groups nor silane groups. This adds the unexpected advantage that a much better storage stability of the compositions can be obtained, without significant loss of curing performance after prolonged storage of the components. In these embodiments, compound **T** is preferably selected from alkyls and carboxylic acid esters having one thiol group exclusively.

Accordingly, in especially preferred embodiments, the at least one compound **T** comprises or consist of one or more compounds selected from aliphatic monothiols, in particular 1-decanthiol and 1-dodecanthiol, and 3-mercaptopropionic acid alkyl esters and thioglycolic acid alkyl esters, in particular 2-ethylhexyl thioglycolate, 2-ethylhexyl-3-mercaptopropionate, and isooctyl thioglycolate.

The molar ratio of all the thiol groups in the at least one compound **T** to all metal atoms in the at least one metal catalyst **K** must be between 1:1 and 250:1. It is preferably between 2:1 and 150:1, especially between 5:1 and 80:1. This quantitative ratio allows the pot life to be adjusted, specifically within the intrinsic limits of the particular composition, through, for example, the content of catalyst, the reactivity of the isocyanates present, and the amount thereof. The lower limit of the pot life is the pot life that is obtained in a given composition when using a defined amount of catalyst without addition of compound **T.** In many situations suitable for a use according to the invention as a structural adhesive and as semi-structural elastic adhesive and as a consequence of the high reactivity of isocyanate groups with hydroxyls in the presence of a catalyst, without compound **T,** no actual pot life at all is achieved, and the composition starts to cure almost immediately on mixing the two components. The upper limit of the adjustable pot life is accordingly the pot life that would be achieved through the uncatalyzed isocyanate-hydroxyl reaction if a catalyst is not used. Even without the use of a catalyst, this reaction will commence at some point after mixing the two components. However, the reaction without catalyst proceeds much more slowly and with a very sluggish development of poorer mechanical properties in the cured material.

The key advantage achieved by the two-component polyurethane composition of the invention is a system that cures and develops strength with extraordinary rapidity, while at the same time having an adequately long pot life that allows it to be processed in a user-friendly manner. This means, for example, that structural bonding may be carried out on relatively large substrates too, which can be subjected to mechanical stress just a very short time after application of the adhesive. This results, for example, in a significant shortening of throughput times in industrial production. A further advantage of the polyurethane compositions of the invention is the possibility of being able to adjust the pot life within certain limits as described above. This is very advantageous particularly in automated applications and can for example allow further optimization of throughput times in industrial production, since the pot life can be tailored to the desired use.

The amount of compound **T** in the first component **A** is preferably within a range from 0.1% to 10% by weight, based on component **A.**

### Polvisocvanate I

The second component **B** comprises at least one polyisocyanate **I.** Furthermore, component **B** exhibits a total isocyanate content of between 100 and 400 mmol NCO per kilogram, preferably between 200 and 300 mmol per kilogram of component **B.**

The total NCO content can be determined quantitatively for example by adding a known excess of dibutylamine and backtitrating the unreacted dibutylamine with aqueous HCl.

The polyisocyanate **I** of the second component **B** must contain proportions of a polyurethane polymer **PU** containing isocyanate groups and may even consist of such polymers.

The polyurethane polymer **PU** containing isocyanate groups can be produced separately, or the polyurethane polymer **PU** containing isocyanate groups can be formed *in situ* by mixing a polyisocyanate with at least one polyol, especially at least a polyether polyol, with the isocyanate groups present in a stoichiometric excess over the OH groups, optionally in the presence of a suitable catalyst.

In preferred embodiments, the polyurethane polymer **PU** has an average molecular weight Mₙ in the range from 3'500 to 15'000 g/mol, more preferably 4'000 to 12'000 g/mol, especially 5'000 to 10'000 g/mol. The NCO content of polyurethane polymer **PU** is preferably in the range from 0.6% to 3.5% by weight, more preferably 0.7% to 3% by weight, especially 0.8% to 2.5% by weight, based on the polymer. It is preferably obtained from the reaction of at least one polyol having an average OH functionality in the range from 1.9 to 3 and in OH number in the range from 8 to 56 mg KOH/g, preferably 10 to 42 mg KOH/g, and at least one monomeric diisocyanate, preferably employing an NCO/OH ratio of between 1.5/1 and 10/1.

In the reaction, the OH groups of the polyol react with the isocyanate groups of the monomeric diisocyanate. This also results in what are called chain extension reactions, in that there is reaction of OH groups and/or isocyanate groups of reaction products between polyol and monomeric diisocyanate. The higher the NCO/OH ratio chosen, the lower the level of chain extension reactions that takes place, and the lower the polydispersity and hence the viscosity of the polymer obtained. A measure of the chain extension reaction is the average molecular weight of the polymer, or the breadth and distribution of the peaks in the GPC analysis. A further measure is the effective NCO content of the polymer freed of monomers relative to the theoretical NCO content calculated from the reaction of every OH group with a monomeric diisocyanate.

Suitable monomeric diisocyanates for the production of polyurethane polymer **PU** are commercial aromatic or aliphatic diisocyanates, especially diphenylmethane 4,4'-diisocyanate, optionally with fractions of diphenylmethane 2,4'- and/or 2,2'-diisocyanate (MDI), tolylene 2,4-diisocyanate or mixtures thereof with tolylene 2,6-diisocyanate (TDI), phenylene 1,4-diisocyanate (PDI), naphthalene 1,5-diisocyanate (NDI), hexane 1,6-diisocyanate (HDI), 2,2(4),4-trimethylhexamethylene 1,6-diisocyanate (TMDI), cyclohexane 1,3- or 1,4-diisocyanate, 1-isocyanato-3,3,5-trimethyl-5-isocyanatomethylcyclohexane (isophorone diisocyanate or IPDI), perhydro-diphenylmethane 2,4'- or 4,4'-diisocyanate (HMDI), 1,3- or 1,4-bis(isocyanatomethyl)cyclohexane, m- or p-xylylene diisocyanate (XDI), m-tetramethylxylylene diisocyanate (TMXDI), or mixtures thereof.

A particularly preferred monomeric aromatic diisocyanate is diphenylmethane 4,4'-diisocyanate (4,4'-MDI). This 4,4'-MDI is of a quality that contains only small fractions of diphenylmethane 2,4'- and/or 2,2'-diisocyanate and is solid at room temperature. It enables moisture-curing polyurethane compositions having particularly rapid curing and particularly high strength coupled with high extensibility and elasticity.

The 4,4'-MDI has preferably been distilled and has a purity of at least 95%, especially at least 97.5%.

A commercially available diphenylmethane 4,4'-diisocyanate of this quality is, for example, Desmodur^{®} 44 MC (from Covestro) or Lupranat^{®} MRSS oder ME (from BASF) or Suprasec^{®} 1400 (from Huntsman) or Millionate^{®} MT (from Tosoh).

Further preferably, the monomeric diisocyanate is a sterically unhindered diisocyanate, especially MDI, PDI, HDI or HMDI. Such diisocyanates afford moisture-curing polyurethane compositions having a particularly high curing rate and strength.

Most preferred among these is diphenylmethane 4,4'-diisocyanate as monomeric diisocyanate. In this way, moisture-curing polyurethane compositions having surprisingly good storage stability, particularly rapid curing and particularly high strength coupled with high elasticity are obtained.

Suitable polyols are commercial polyols commonly used for the synthesis of polyurethane polymers that are preferably liquid at room temperature. The same polyols as for polyol **A1** may for example be used.

Preference is given to polyols having an average molecular weight Mₙ in the range from 800 to 15'000 g/mol, more preferably 1'000 to 12'000 g/mol, especially 2'000 to 8'500 g/mol.

The polyol preferably has an average OH functionality in the range from 1.7 to 3.

The polyol is preferably a diol or triol having an OH number in the range from 8 to 185 mg KOH/g, especially in the range from 10 to 120 mg KOH/g.

The polyol is preferably a polyether polyol, and the polyurethane polymer **PU** containing isocyanate groups obtaining therefrom is thus a polyetherurethane polymer containing isocyanate groups. Such a polymer enables moisture-curing polyurethane compositions having high extensibility and elasticity. Repeat units present therein are preferably 1,2-ethyleneoxy, 1,2-propyleneoxy, 1,3-propyleneoxy, 1,2-butyleneoxy or 1,4-butyleneoxy groups. More preferably, repeat units present in the polyether polyol are mainly or exclusively 1,2-propyleneoxy groups. More particularly, based on all repeat units, it has 80% to 100% by weight of 1,2-propyleneoxy groups and 0% to 20% by weight of 1,2-ethyleneoxy groups.

Polyoxyalkylene diols and/or polyoxyalkylene triols are particularly suitable, especially polymerization products of ethylene oxide or 1,2-propylene oxide or 1,2- or 2,3-butylene oxide or oxetane or tetrahydrofuran or mixtures thereof, where these may be polymerized with the aid of a starter molecule having two or more active hydrogen atoms, especially a starter molecule such as water, ammonia or a compound having multiple OH or NH groups, such as, for example, ethane-1,2-diol, propane-1,2- or -1,3-diol, neopentyl glycol, diethylene glycol, triethylene glycol, the isomeric dipropylene glycols or tripropylene glycols, the isomeric butanediols, pentanediols, hexanediols, heptanediols, octanediols, nonanediols, decanediols, undecanediols, cyclohexane-1,3- or -1,4-dimethanol, bisphenol A, hydrogenated bisphenol A, 1,1,1-trimethylolethane, 1,1,1-trimethylolpropane, glycerol or aniline, or mixtures of the abovementioned compounds.

Particular preference is given to polyoxypropylene diols, polyoxypropylene triols, or ethylene oxide-terminated polyoxypropylene diols or triols. These are polyoxyethylene/polyoxypropylene copolyols which are obtained especially by further alkoxylating polyoxypropylene diols or triols with ethylene oxide on conclusion of the polypropoxylation reaction, with the result that they ultimately have primary hydroxyl groups.

Preferred polyether polyols have a level of unsaturation of less than
0.02 meq/g, especially less than 0.01 meq/g.

In one embodiment, preference is given to a trimethylolpropane- or especially glycerol-started, optionally ethylene oxide-terminated, polyoxypropylene triol having an average molecular weight Mₙ in the range from 3'500 to 15'000 g/mol, preferably 4'000 to 12'000 g/mol, especially 4'500 to 8'500 g/mol.

In some preferred embodiments, the NCO/OH ratio in the reaction between the monomeric diisocyanate and the polyol is preferably in the range from 3/1 to 10/1, more preferably in the range from 3/1 to 8/1, especially in the range from 4/1 to 7/1. With such high NCO/OH ratios, a lower polydispersity and more uniform chain length of the resulting polyurethane polymer **PU** can be obtained.

The reaction between the monomeric diisocyanate and the polyol is preferably conducted with exclusion of moisture at a temperature in the range from 20 to 160°C, especially 40 to 140°C, optionally in the presence of suitable catalysts. After the reaction, the monomeric diisocyanate remaining in the reaction mixture may removed by means of a suitable separation method down to an acceptable residual content. This is particularly advisable in cases where a high NCO/OH ratio is used during synthesis and/or in cases where an especially low final content of monomeric diisocyanates within the composition is desired.

A preferred separation method is a distillative method, especially thin-film distillation or short-path distillation, preferably with application of reduced pressure.

Particular preference is given to a multistage method in which the monomeric aromatic diisocyanate is removed in a short-path evaporator with a jacket temperature in the range from 120 to 200°C and a pressure of 0.001 to 0.5 mbar.

In the case of 4,4'-MDI, which is preferred as monomeric diisocyanate, distillative removal is particularly demanding. It has to be ensured, for example, that the condensate does not solidify and block the system. Preference is given to operating at a jacket temperature in the range from 160 to 200°C at 0.001 to 0.5 mbar, and condensing the monomer removed at a temperature in the range from 40 to 60°C.

Preference is given to reacting the monomeric diisocyanate with the polyether polyol and subsequently removing the majority of the monomeric diisocyanate remaining in the reaction mixture without the use of solvents or entraining agents.

Preference is given to subsequently reusing the monomeric diisocyanate removed after the reaction, i.e., by using it again for the preparation of polyurethane polymer **PU** containing isocyanate groups.

The polymer **PU** containing isocyanate groups and having a low monomeric diisocyanate content preferably has a viscosity at 20°C of not more than 50 Pa s, especially not more than 40 Pa s, more preferably not more than 30 Pa s. The viscosity is determined here with a cone-plate viscometer having a cone diameter 25 mm, cone angle 1°, cone tip-plate distance 0.05 mm, at a shear rate of 10 s⁻¹. If necessary, solvents and/or plasticizers can be added during or after synthesis of polymer **PU** to facilitate mixing and handling thereof.

In especially preferred embodiments of the polyurethane composition according to the invention, the polyurethane polymer **PU** containing isocyanate groups in polyisocyanate I is obtained from a reaction of at least one polyether polyol and diphenylmethane 4,4'-, 2,4'- and/or 2,2'-diisocyanate (MDI).

In the same or other especially preferred embodiments of the polyurethane composition according to the invention, said polyether polyol for the production of said polyurethane polymer **PU** containing isocyanate groups is a mixture of a polyether diol and a polyether triol.

Apart from said polyurethane polymer **PU,** polyisocyanate **I** may comprise further isocyanate-functional compounds, in particular polyisocyanates.

Suitable polyisocyanates are in particular monomeric di- or triisocyanates and also oligomers, polymers, and derivatives of monomeric di- or triisocyanates, and any desired mixtures thereof.

Suitable aromatic monomeric di- or triisocyanates are especially tolylene 2,4- and 2,6-diisocyanate and any desired mixtures of these isomers (TDI), diphenylmethane 4,4'-, 2,4'-, and 2,2'-diisocyanate and any desired mixtures of these isomers (MDI), mixtures of MDI and MDI homologs (polymeric MDI or PMDI), 1,3- and 1,4-phenylene diisocyanate, 2,3,5,6-tetramethyl-1,4-diisocyanatobenzene, naphthalene 1,5-diisocyanate (NDI), 3,3'-dimethyl-4,4'-diisocyanatodiphenyl (TODI), dianisidine diisocyanate (DADI), 1,3,5-tris(isocyanatomethyl)benzene, tris(4-isocyanatophenyl)methane, and tris(4-isocyanatophenyl) thiophosphate.

Suitable aliphatic monomeric di- or triisocyanates are especially tetramethylene 1,4-diisocyanate, 2-methylpentamethylene 1,5-diisocyanate, hexamethylene 1,6-diisocyanate (HDI), pentamethylene-1,5-diisocyanate (PDI), 2,2,4- and 2,4,4-trimethylhexamethylene 1,6-diisocyanate (TMDI), decamethylene 1,10-diisocyanate, dodecamethylene 1,12-diisocyanate, lysine diisocyanate and lysine ester diisocyanate, cyclohexane 1,3- and 1,4-diisocyanate, 1-methyl-2,4-diisocyanatocyclohexane and -2,6-diisocyanatocyclohexane and any desired mixtures of these isomers (HTDI or H₆TDI), 1-isocyanato-3,3,5-trimethyl-5-isocyanatomethylcyclohexane (= isophorone diisocyanate or IPDI), perhydrodiphenylmethane 2,4'- and 4,4'-diisocyanate (HMDI or H₁₂MDI), 1,4-diisocyanato-2,2,6-trimethylcyclohexane (TMCDI), 1,3- and 1,4-bis(isocyanatomethyl)cyclohexane, m- and p-xylylene diisocyanate (m- and p-XDI), m- and p-tetramethylxylylene 1,3- and 1,4-diisocyanate (m- and p-TMXDI), bis(1-isocyanato-1-methylethyl)naphthalene, dimer and trimer fatty acid isocyanates such as 3,6-bis(9-isocyanatononyl)-4,5-di-(1-heptenyl)cyclohexene (dimeryl diisocyanate), and α,α,α',α',α",α"-hexamethyl-1,3,5-mesitylene triisocyanate.

Preference among these is given to MDI, TDI, HDI, and IPDI.

Suitable oligomers, polymers, and derivatives of the recited monomeric di- and triisocyanates are especially those derived from MDI, TDI, HDI, PDI, and IPDI. Particularly suitable among these are commercially available grades, especially HDI biurets such as Desmodur^{®} N 100 and N 3200 (from Covestro), Takenate^{®} D-165 (from Mitsui Chemicals), Tolonate^{®} HDB and HDB-LV (from Vencorex), and Duranate^{®} 24A-100 (from Asahi Kasei); PDI allophanates or isocyanurates such as STABiO^{®} D-376N (from Mitsui Chemicals); HDI isocyanurates such as Desmodur^{®} N 3300, N 3600, and N 3790 BA (all from Covestro), Tolonate^{®} HDT, HDT-LV, and HDT-LV2 (from Vencorex), Duranate^{®} TPA-100 and THA-100 (from Asahi Kasei), and Coronate^{®} HX (from Nippon Polyurethane); HDI uretdiones such as Desmodur^{®} N 3400 (from Covestro); HDI iminooxadiazinediones such as Desmodur^{®} XP 2410 (from Covestro); HDI allophanates such as Desmodur^{®} VP LS 2102 (from Covestro); IPDI isocyanurates, for example in solution as Desmodur^{®} Z 4470 (from Covestro) or in solid form as Vestanat^{®} T1890/ 100 (from Evonik); TDI oligomers such as Desmodur^{®} IL (from Covestro); and also mixed isocyanurates based on TDI/HDI, for example as Desmodur^{®} HL (from Covestro). Also particularly suitable are MDI forms that are liquid at room temperature (so-called "modified MDI"), which are mixtures of MDI with MDI derivatives such as, especially, MDI carbodiimides or MDI uretonimines or MDI urethanes, known under trade names such as Desmodur^{®} CD, Desmodur^{®} PF, Desmodur^{®} PC (all from Covestro) or Isonate^{®} M 143 (from Dow), and mixtures of MDI and MDI homologs (polymeric MDI or PMDI), available under trade names such as Desmodur^{®} VL, Desmodur^{®} VL50, Desmodur^{®} VL R10, Desmodur^{®} VL R20, Desmodur^{®} VH 20 N, and Desmodur^{®} VKS 20F (all from Covestro), Isonate^{®} M 309, Voranate^{®} M 229 and Voranate^{®} M 580 (all from Dow) or Lupranat^{®} M 10 R (from BASF). The abovementioned oligomeric polyisocyanates are in practice typically mixtures of substances having different degrees of oligomerization and/or chemical structures. They preferably have an average NCO functionality of 2.1 to 4.0.

The polyisocyanate is preferably selected from the group consisting of MDI, TDI, HDI, and IPDI, and oligomers, polymers, and derivatives of the recited isocyanates, and mixtures thereof.

The polyisocyanate **I** preferably comprises compounds having isocyanurate, iminooxadiazinedione, uretdione, biuret, allophanate, carbodiimide, uretonimine, or oxadiazinetrione groups.

In the second component **B** of the composition of the invention, polyisocyanate **I** is preferably present in an amount from 25% by weight to 100% by weight, especially from 30% by weight to 80% by weight, more preferably from 40% by weight to 60% by weight, based on the second component **B.**

### Catalyst K

The first component **A** and/or the second component **B** further comprises at least one metal catalyst **K** for the reaction of hydroxyl groups and isocyanate groups that is able to form thio complexes. Suitable metal catalysts **K** are thus all metal catalysts that may be used as a crosslinking catalyst in polyurethane chemistry and can at the same time form thio complexes with thiols in the presence thereof.

The metal catalyst **K** is preferably present only in the first component **A.** This has the advantage of achieving better storage stability.

The amount of metal catalyst **K** in the first component **A** is in this embodiment preferably within a range from 0.05% to 10% by weight, preferably 0.1% to 5.0% by weight, especially 0.2% to 1.5% by weight, more preferably 0.25% to 1.0% by weight, based on the first component **A.**

When the catalyst is present in the second component **B,** the same preferred amount ranges apply as described above, but based on component **B.**

Examples of suitable metal catalysts are compounds of bismuth, zinc, tin or zirconium, including complexes and salts of these metals.

In preferred embodiments of the polyurethane composition according to the invention, the metal catalyst **K** comprises a bismuth(III) or a tin(IV) compound.

The metal catalyst **K** preferably includes a bismuth compound, especially a bismuth(III) compound. In addition to the desired properties as a catalyst able to form thio complexes, a bismuth compound has the advantage of low acute toxicity.

A multiplicity of conventional bismuth catalysts may be used as the bismuth compound. Examples are bismuth carboxylates, for example bismuth acetate, oleate, octoate or neodecanoate, bismuth nitrate, bismuth halides such as the bromide, chloride, or iodide, bismuth sulfide, basic bismuth carboxylates such as bismuthyl neodecanoate, bismuth subgallate or bismuth subsalicylate, and mixtures thereof.

In a preferred embodiment, the metal catalyst **K** is a bismuth(III) complex containing at least one ligand based on 8-hydroxyquinoline. Such complexes are described in EP 1551895. This is preferably a bismuth(III) carboxylate containing one molar equivalent of an 8-hydroxyquinoline ligand.

In a further preferred embodiment, the metal catalyst **K** is a bismuth(III) complex containing at least one ligand based on a 1,3-ketoamide. Such complexes are described in EP 2791153. This is preferably a bismuth(III) carboxylate containing 1 to 3 molar equivalents of a 1,3-ketoamide ligand.

### Additional additives

In addition to the constituents already mentioned, the polyurethane composition may contain further constituents as known to the person skilled in the art from two-component polyurethane chemistry. These may be present in just one component or in both.

Preferred further constituents are inorganic or organic fillers **F,** such as in particular natural, ground or precipitated calcium carbonates, optionally coated with fatty acids, especially stearic acid, baryte (heavy spar), talcs, quartz powders, quartz sand, dolomites, wollastonites, kaolins, calcined kaolins, mica (potassium aluminum silicate), molecular sieves, aluminum oxides, aluminum hydroxides, magnesium hydroxide, silicas including finely divided silicas from pyrolysis processes, industrially produced carbon blacks, graphite, metal powders such as aluminum, copper, iron, silver or steel, PVC powder or hollow spheres, and also flame-retardant fillers such as hydroxides or hydrates, especially hydroxides or hydrates of aluminum, preferably aluminum hydroxide.

Preferably, the composition of the invention comprises at least one filler **F** in the first component **A,** in the second component **B** or in both components.

The addition of fillers **F** is advantageous in that it increases the strength of the cured polyurethane composition.

The polyurethane composition preferably comprises at least one filler **F** selected from the group consisting of calcium carbonate, carbon black, kaolin, baryte, talc, quartz powder, dolomite, wollastonite, kaolin, calcined kaolin, and mica. Particular preference as fillers **F** is given to ground calcium carbonates, calcined kaolins or carbon black.

It may be advantageous to use a mixture of different fillers. Most preferred are combinations of calcium carbonate or calcined kaolin and carbon black.

The content of filler **F** in the composition is preferably within a range from 5% by weight to 50% by weight, especially 10% by weight to 40% by weight, more preferably 15% by weight to 35% by weight, based on the overall composition.

The content of filler **F** in the first component **A** is preferably within 10% to 60% by weight, preferably 15% to 50% by weight, especially 20% to 45% by weight, of filler **F,** based on component **A.**

The content of filler **F** in the second component **B** is preferably within a range from 0% to 60% by weight, preferably 10% to 50% by weight, especially 10% to 45% by weight, of filler **F,** based on the second component **B.**

It is possible for further constituents to be additionally present, especially solvents, plasticizers and/or extenders, pigments, rheology modifiers such as, in particular, amorphous silicas, desiccants such as, in particular, zeolites, adhesion promoters such as, in particular, organofunctional trialkoxysilanes, stabilizers against oxidation, heat, light, and UV radiation, flame-retardant substances, and also surface-active substances, especially wetting agents and defoamers.

The polyurethane composition contains preferably less than 0.5% by weight, especially less than 0.1% by weight, of carboxylic acids, based on the overall composition. Any carboxylate ligands introduced through the metal catalyst are not included here among the stated carboxylic acids.

The polyurethane composition contains preferably less than 1% by weight, in particular less than 0.5% by weight, especially less than 0.1% by weight, of monomeric diisocyanates, based on the overall composition.

A preferred polyurethane composition comprises a first component **A** that, based on component **A,** comprises
- 30% to 80% by weight, preferably 40% to 75% by weight, especially 50% to 70% by weight, of polyol **A1,** in particular a mixture of polyol **A1a** and polyol **A1b** as defined further above;
- 0.1% to 15% by weight, preferably 0.5% to 10% by weight, especially 1% to 7.5% by weight, of at least one compound **T** having at least one, preferably only one thiol group,
- 0.05% to 2.5% by weight, preferably 0.1% to 2.0% by weight, especially 0.2% to 1.5% by weight, more preferably 0.25% to 1.0% by weight, of a metal catalyst **K,** and
- 10% to 60% by weight, preferably 15% to 50% by weight, especially 20% to 45% by weight, of filler **F,**
and optionally further constituents.

The same or another preferred polyurethane composition comprises a second component **B** that, based on component **B,** comprises
- 25% to 100% by weight, preferably 30% to 75% by weight, especially 40% to 60% by weight, of polyisocyanate **I,**
- 0% to 60% by weight, preferably 10% to 50% by weight, especially 10% to 45% by weight, of filler **F,**
and optionally further constituents.

It is advantageous when the first component **A** and the second component **B** are formulated such that their mixing ratio in parts by volume or parts by weight is within a range from 15:1 to 1:15, preferably from 1:1 to 1:15, especially from 1:8 to 1:13.

In the mixed polyurethane composition, the molar ratio before curing between the number of isocyanate groups in component **B** and the number of active hydrogen-containing groups reactive toward isocyanates in component **A** is preferably within a range from 3 to 1, preferably 2.5 to 2. However, it is also possible, although not usually preferable, for the proportion of isocyanate groups to be substoichiometric with respect to groups reactive toward isocyanates.

The two components **A** and **B** are produced separately and preferably with the exclusion of moisture. The two components are typically each stored in a separate container. The further, non-mandatory additives of the polyurethane composition as defined above may be present as a constituent of the first or second component, further additives that are reactive toward isocyanate groups preferably being a constituent of the first component **A.** A suitable container for storing the respective component is especially a drum, a hobbock, a bag, a bucket, a can, a cartridge or a tube. The components are both storage-stable, at least in preferred embodiments, meaning that they can be stored prior to use for several months up to one year or longer, without any change in their respective properties to a degree relevant to their use.

The two components **A** and **B** are stored separately prior to the mixing of the composition and are mixed with one another only on use or immediately prior thereto. They are advantageously present in a package consisting of two separate chambers.

In a further aspect, the invention comprises a pack consisting of a package having two separate chambers which respectively contain the first component **A** and the second component **B** of the composition.

Mixing is typically performed via static mixers or with the aid of dynamic mixers. During mixing, care must be taken to ensure that the two components **A** and **B** are mixed as homogeneously as possible. If the two components are mixed incompletely, local deviations from the advantageous mixing ratio will occur, which can result in a deterioration in the mechanical properties.

On contact of the first component **A** with the second component **B,** curing commences through chemical reaction. This involves reaction of the hydroxyl groups and any other substances present that are reactive toward isocyanate groups with the isocyanate groups. Excess isocyanate groups react predominantly with moisture. As a result of these reactions, the polyurethane composition cures to produce a solid material. This process is also referred to as crosslinking.

The invention thus also further provides a cured polyurethane composition obtained from the curing of the polyurethane composition as described in the present document.

The two-component polyurethane composition described is advantageously usable as structural adhesive or semi-structural elastic adhesive, potting compound or matrix in composite materials, in particular as an assembly adhesive or a direct glazing adhesive.

The invention thus also relates to a method for adhesive bonding a first substrate to a second substrate, which comprises the steps of:
- mixing the first component **A** and the second component **B** described above,
- applying the mixed polyurethane composition to at least one of the substrate surfaces to be bonded,
- joining the substrates to be bonded within the pot life,
- curing the polyurethane composition.
These two substrates may consist of the same material or different materials.

The invention thus also further relates to a method for filling joins and gaps between two substrates, which comprises the steps of:
- mixing the first and second components described above,
- applying the mixed polyurethane composition to the join or gap,
- curing the polyurethane composition.

In these methods for adhesive bonding or for filling joins and gaps, suitable substrates are in particular
- glass, glass ceramic, glass mineral fiber mats;
- metals and alloys such as aluminum, iron, steel and nonferrous metals, and also surface-finished metals and alloys such as galvanized or chromed metals;
- coated and painted substrates, such as powder-coated metals or alloys and painted sheet metal;
- plastics, such as polyvinyl chloride (rigid and flexible PVC), acrylonitrile-butadiene-styrene copolymers (ABS), polycarbonate (PC), polyamide (PA), poly(methyl methacrylate) (PMMA), polyester, epoxy resins, especially epoxy-based thermosets, polyurethanes (PUR), polyoxymethylene (POM), polyolefins (PO), polyethylene (PE) or polypropylene (PP), in particular talc-filled polypropylene, ethylene/propylene copolymers (EPM), and ethylene/propylene/diene terpolymers (EPDM), wherein the plastics may preferably have been surface-treated by means of plasma, corona or flames;
- fiber-reinforced plastics, such as carbon fiber-reinforced plastics (CFRP), glass fiber-reinforced plastics (GFRP), such as glass fiber-reinforced polypropylene, and sheet-molding compounds (SMC);
- wood, woodbase materials bonded with resins, for example phenolic, melamine or epoxy resins, resin-textile composites and further so-called polymer composites; and
- concrete, mortar, brick, plaster, and natural stone such as granite, limestone, sandstone or marble.

In these methods, one or both substrates is/are preferably an optionally coated metal or a glass ceramic or a glass or a talc-filled polypropylene or a glass fiber-reinforced plastic or a carbon fiber-reinforced plastic or an epoxy-based thermoset.

The substrates can if required be pretreated prior to application of the composition. Such pretreatments include, in particular, physical and/or chemical cleaning processes and the application of an adhesion promoter, an adhesion promoter solution or a primer, or dry processing such as plasma treatment or flame treatment.

The adhesive bonding process described gives rise to an article in which the composition joins two substrates to one another.

Said article is especially a sandwich element of a lightweight structure, a built structure, for example a bridge, an industrial product or a consumer product, especially a window, a rotor blade of a wind turbine or a mode of transport, especially a vehicle, preferably an automobile, a bus, a truck, a rail vehicle or a ship, or else an aircraft or a helicopter, or an installable component of such an article.

The polyurethane composition described is characterized by high strength and elasticity that is highly constant over a wide temperature range from -35°C to 85°C and by good, largely temperature-independent adhesion properties on metallic substrates. On account of these properties, it is very particularly suitable as structural adhesive or semi-structural elastic adhesive for bonds that are subjected to stress, in particular outdoors at ambient temperatures.

The invention thus also further provides for the use of the described polyurethane composition as structural adhesive or semi-structural elastic adhesive for adhesive bonding of two substrates, in particular as an assembly adhesive or a direct glazing adhesive.

The polyurethane composition described is likewise advantageously usable as a potting compound, especially as a potting compound for the filling of gaps and joins, for repair purposes as a ballast compensation compound or for protection of electronic components.

The polyurethane composition is further preferably used as casting compound, especially as electrical potting compound. In a further aspect, the invention therefore encompasses the use of a two-component polyurethane composition as a potting compound, especially as an electrical potting compound.

In a further aspect, the invention therefore encompasses a method for filling joins and gaps in a substrate, comprising the steps of
a) mixing the first component and the second component of a two-component polyurethane composition as described above,
b) applying the mixed polyurethane composition to the join to be bridged between two substrates or to the gap to be filled on the surface of a substrate,
c) curing the polyurethane composition in the join or gap.

In a further aspect, the invention therefore also encompasses a filled article that has been filled according to the method described above.

The polyurethane composition is further preferably used as matrix in composite materials. The polyurethane composition serves here as a binder into which fibers or other reinforcing structures are embedded. In a further aspect, the invention therefore encompasses the use of a two-component polyurethane composition as matrix in composite materials.

### Examples

### Substances used:

**Table 1: Substances used.**

| | |
|---|---|
| Preminol 7001 K | Preminol^{®} 7001K (Asahi Glass AGC); ethylene-oxide terminated polypropylene glycol, MW: 6'000 g/mol; OH value: 29 mg KOH/g; average OH functionality: 3 |
| Excenol 450ED | Excenol^{®} 450ED (Asahi Glass AGC); ethylene diamine-started, ethylene-oxide terminated polypropylene glycol, MW: 500 g/mol; OH value: 450 mg KOH/g; average OH functionality: 4 |
| Polyol BM-34 | Adeka Polyether^{®} BM-34 (Adeka); ethylene diamine-started, ethylene-oxide terminated polypropylene glycol, MW: 280 g/mol; OH value: 820 mg KOH/g; average OH functionality: 4 |
| PolyBD R45HT | Poly bd^{®} R45HT (Idemitsu Kosan); polybutadiene polyol; MW: 2'800 g/mol; OH value 46.6 mg KOH/g; average OH functionality: 2.3 |
| PolyIP | Poly ip^{®} (Idemitsu Kosan); liquid polyisoprene polyol; MW: 2'500 g/mol; OH value 47.1 mg KOH/g; average OH functionality: 2.1 |
| EPOL | EPOL^{®} (Idemitsu Kosan); liquid polyolefin polyol; MW: 2'500 g/mol; OH value 50.5 mg KOH/g; average OH functionality: 2.3 |
| Polyol 3610 | Polyol 3610 (Perstorp); ethoxylated trimethyolpropane; MW: 275 g/mol; OH value 610 mg KOH/g; average OH functionality: 3 |
| Polyol 4290 | Polyol 4290 (Perstorp); ethoxylated pentaerythritol; MW: 800 g/mol; OH value 290 mg KOH/g; average OH functionality: 4 |
| Polyol 4640 | Polyol 4290 (Perstorp); ethoxylated pentaerythritol; MW: 360 g/mol; OH value 630 mg KOH/g; average OH functionality: 4 |
| Polyol R6405 | Polyol R6405 (Perstorp); ethoxylated dipentaerythritol; MW: 830 g/mol; OH value 405 mg KOH/g; average OH functionality: 6 |
| Kuraray F-510 | Kuraray^{®} F-510 (Kuraray); polyester polyol; MW: 500 g/mol; OH value: 336 mg KOH/g; average OH functionality: 3 |
| Kuraray P-3010 | Kuraray^{®} P-3010 (Kuraray); polyester polyol; MW: 3000 g/mol; OH value: 37 mg KOH/g; average OH functionality: 2 |
| GDMP | Thiocure^{®} GDMP (Bruno Bock Thiochemicals); glycol di(3-mercaptopropionate) |
| TMMP | Trimethylolpropane tris(3-mercaptopropionate) (Sigma Aldrich) |
| EHMP | 2-Ethylhexyl-3-mercaptopropionate (SC Organic Chemical Co.) |
| 2-EHTG | 2-Ethylhexyl thioglycolate (Arkema) |
| IOTG | Isooctyl thioglycolate (Sigma Aldrich) |
| MBMP | 2-Methoxybutyl 3-sulfanylpropanoate (Sigma Aldrich) |
| MPSilane | 3-Mercaptopropyl trimethoxysilane (Sigma Aldrich) |
| DecThiol | 1-Decanthiol (Sigma Aldrich) |
| DodecThiol | 1-Dodecanthiol (Sigma Aldrich) |
| Carbon black | Monarch^{®} 570 (Cabot Corp.); carbon black (filler) |
| Chalk | SEALETS 200 (Marou Calcium Co.); surface-treated (fatty acid coated) calcium carbonate (filler) |
| Bi catalyst | Neostann^{®} U-600 (Nitto Casei); bismuth tris(2-ethylhexanoate) |

### Preparation of polyurethane compositions

To show the effects of the invention, a series of two-component polyurethane compositions were prepared by first preparing the individual components **A** and **B.** This is described in the following.

### Component A

A series of exemplary components **A** were prepared (A-1 to A-20) to study the influence of different compounds having thiol groups and different polyols. The compositions of the components **A** are shown in Tables 2 to 5. The numerical values of the ingredients in each experiment denote the weight parts added to each respective composition.

**Table 2: Components A (A-1 to A-5). Numbers in weight parts. * not according to the invention.**

| **Component A** | **A-1 *** | **A-2 *** | **A-3 *** | **A-4 *** | **A-5** |
|---|---|---|---|---|---|
| Preminol 7001K | 59.16 | 59.16 | 59.16 | 59.16 | 59.16 |
| Excenol 450ED | 12.67 | 12.67 | 12.67 | 12.67 | 12.67 |
| Chalk | 32.26 | 32.26 | 32.26 | 32.26 | 32.26 |
| Catalyst | 0.01 | 0.1 | 0.75 | 6 | 0.75 |
| GDMP | - | - | 0.16 | - | - |
| TMMP | - | - | - | 2.13 | - |
| EHMP | - | - | - | - | 1.82 |
| *Total* | *104* | *104* | *105* | *112* | *107* |

**Table 3: Components A (A-6 to A-10 and A-21). Numbers in weight parts.**

| **Component A** | **A-6** | **A-7** | **A-8** | **A-9** | **A-10** | **A-21** |
|---|---|---|---|---|---|---|
| Preminol 7001K | 59.16 | 59.16 | 59.16 | 59.16 | 59.16 | 59.16 |
| Excenol 450ED | 12.67 | 12.67 | 12.67 | 12.67 | 12.67 | 12.67 |
| Chalk | 32.26 | 32.26 | 32.26 | 32.26 | 32.26 | 32.26 |
| Catalyst | 0.75 | 0.75 | 0.75 | 0.75 | 0.75 | 0.75 |
| 2-EHTG | 9.72 | - | - | - | - | - |
| IOTG | - | 9.72 | - | - | - | - |
| MBMP | - | - | 1.82 | - | - | - |
| MPSilane | - | - | - | 0.90 | - | - |
| DecThiol | - | - | - | - | 0.90 | - |
| DodecThiol | - | - | - | - | - | 0.90 |
| *Total* | *115* | *115* | *107* | *106* | *106* | *106* |

**Table 4: Components A (A-11 to A-15). Numbers in weight parts. * not according to the invention.**

| **Component A** | **A-11** | **A-12** | **A-13** | **A-14** | **A-15 *** |
|---|---|---|---|---|---|
| Preminol 7001K | - | - | - | - | 59.16 |
| Excenol 450ED | 12.67 | 12.67 | 12.67 | 12.67 | - |
| PolyBD R45HT | - | - | 36.31 | - | - |
| PolyIP | - | 35.92 | - | - | - |
| EPOL | - | - | - | 33.51 | - |
| Kuraray F-510 | - | - | - | - | 25.47 |
| Kuraray P-3010 | 44.19 | - | - | - | - |
| Chalk | 32.26 | 32.26 | 32.26 | 32.26 | 32.26 |
| Catalyst | 0.75 | 0.75 | 0.75 | 0.75 | 1.88 |
| DecThiol | 0.90 | 0.90 | 0.90 | 0.90 | 0.90 |
| *Total* | *90.77* | *82.5* | *82.89* | *80.09* | *119.66* |

**Table 5: Components A (A-16 to A-20). Numbers in weight parts. * not according to the invention.**

| **Component A** | **A-16** | **A-17 *** | **A-18** | **A-19** | **A-20** |
|---|---|---|---|---|---|
| Preminol 7001K | 59.16 | 59.16 | 59.16 | 59.16 | 59.16 |
| Polyol BM-34 | 6.95 | - | - | - | - |
| Polyol 3610 | - | 9.35 | - | - | - |
| Polyol 4290 | - | - | 19.66 | - | - |
| Polyol 4640 | - | - | - | 9.05 | - |
| Polyol R6405 | - | - | - | - | 14.08 |
| Chalk | 32.26 | 32.26 | 32.26 | 32.26 | 32.26 |
| Catalyst | 0.75 | 0.75 | 0.75 | 0.75 | 0.75 |
| DecThiol | 0.90 | 0.90 | 0.90 | 0.90 | 0.90 |
| *Total* | *100.02* | *102.42* | *112.73* | *102.12* | *107.15* |

### Component B

One exemplary component **B** was prepared (B-1) to be mixed with the exemplary components **A** defined above. The composition details of component B-1 are shown in Table 6.

**Table 6: Component B (B-1) used for the experiments. Numbers in weight parts.**

| **Component B** | **B-1** |
|---|---|
| NCO-functional polyurethane polymer **P-1** | 41 |
| Isocyanurate and allophanate of pentamethylene diisocyanate (PDI) | 3 |
| Carbon black | 20 |
| Chalk | 20 |
| Diisononyl adipate (plasticizer) | 16 |
| *Total* | *100* |

NCO-functional polyurethane polymer **P-1** was prepared by reacting a 1:1 (w/w) mixture of polypropylene glycol (PPG) triol having a Mₙ of 5'000 g/mol and a polypropylene glycol (PPG) diol having a Mₙ of 2'000 g/mol with 4,4'-Diphenylmethandiisocyanate (4,4'-MDI) using the known process, employing a NCO/OH molar ratio of 1.67 and using 18 % by weight, based on the total composition, of diisononyl adipate as reaction medium. The polymer thus obtained had a NCO content of 1.5 % by weight and a content of residual MDI of 2 % by weight. The total NCO content of this polymer mixture was 143 mmol per kilogram of polymer mixture. This mixture was used as "NCO-functional polyurethane polymer **P-1"** without further purification in component B-1.

The content of residual unreacted MDI within the prepared NCO-functional polymer mixture was determined by means of HPLC (detection via photodiode array; 0.04 M sodium acetate / acetonitrile as mobile phase) after prior derivatization by means of N-propyl-4-nitrobenzylamine.

The total NCO content of component B-1, taking into account the above mentioned "NCO-functional polyurethane polymer **P-1"** and additionally added NCO-functional additives (isocyanurates and allophanates) was 293 mmol NCO per kilogram of component B-1.

The total NCO content was determined by adding an excess of dibutylamine and backtitrating the unreacted dibutylamine with aqueous HCl.

### Two-component compositions

A series of exemplary two-component compositions was prepared, using compositions A-1 to A-21 as components **A** and composition B-1 as component **B.** In each experiment, the mixing ratio (weight/weight or volume/volume) of each respective component **A** to component **B** was 1:10.

For each composition, the ingredients of the first component **A** specified in the tables were processed in the specified amounts (in parts by weight), by means of a vacuum dissolver with the exclusion of moisture, into a homogeneous paste and stored. The ingredients of the second component **B** specified in the tables were likewise processed and stored. The two components were then mixed together for 15 seconds, by means of a SpeedMixer^{®} (DAC 150 FV, Hauschild), into a homogeneous paste, which was immediately tested as follows:
The **pot life** was measured in a viscometer as the time until the viscosity reached 10'000 Pa s after mixing the two components. Specifically, the intercept of the slope of the viscosity (y axis) with the time (x axis) when the viscosity reached 10'000 Pa s was defined as the pot life. The viscosity was measured on an MCR 302 parallel-plate rheometer (Anton Paar) with a plate diameter of 25 mm and a plate distance of 1 mm at a frequency of 10 s⁻¹ and a temperature of 20°C. This was done by first mixing the two components for 15 sec in a SpeedMixer (Hauschild) and immediately applying them within 1 additional minute to the plates for the measurement.

To measure the **tensile shear strength,** various test specimens were produced, in each case by applying the adhesive 15 seconds after the end of the mixing time between two heptane-degreased cathodically-electrocoated steel plates in a layer thickness of 2 mm and over an overlapping bonding area of 15 x 45 mm. The test specimens were stored/cured for 10 min at 20°C or for 40 min at 20°C respectively, and then measured immediately. The tensile shear strength was determined according to DIN EN 1465.

Some compositions were assessed regarding their storage stability. For this, the individual components **A** and **B** of the respective compositions were stored in airtight containers for 1 week at 60°C to simulate an ageing process of the components. After this, the individual components were stored at 23°C for 1 day to let them cool down and mixed and tested with the same protocols as described above for the freshly prepared compositions.

The details of the mixed compositions and the results of the test protocol are shown in Tables 7 to 10. "Molar ratio SH:Bi" denotes the molar ratio of all thiol groups of compound **T** to all contained bismuth atoms of catalyst **K.** Considered as excellent were compositions that exhibit a pot life of 4 to 7 min, a tensile shear strength after 10 to 20 min curing of at least 0.1 mPa, and a tensile shear strength after 30 to 60 min curing of at least 2.0 mPa. Such compositions combine a long pot life and fast curing, making them suitable for industrial or automotive applications where sufficient handling time and very fast process cycles are demanded.

**Table 7: Experimental results of compositions C-1 to C-5. * not according to the invention.**

| **Composition** | **C-1 *** | **C-2 *** | **C-3 *** | **C-4 *** | **C-5** |
|---|---|---|---|---|---|
| Component **A** | A-1 | A-2 | A-3 | A-4 | A-5 |
| Component **B** | B-1 | | | | |
| Mixing ratio A:B (w/w) | 1:10 | | | | |
| Molar ratio SH:Bi | - | - | 3.5 | 3.5 | 14.5 |

| *Freshly prepared sample* | | | | | |
|---|---|---|---|---|---|
| Pot life [min] | >4 | <4 | 3.2 | 2.3 | 4.7 |
| Tensile shear strength (10 min curing) [mPa] | <0.1 | >0.1 | 0.19 | 0.21 | 0.11 |
| Tensile shear strength (40 min curing) [mPa] | <2.0 | >2.0 | 2.10 | 2.01 | 3.41 |

| *Thermally aged sample* (*1 week at 60°C*) | | | | | |
|---|---|---|---|---|---|
| Pot life [min] | >4 | <4 | 3.3 | 4.5 | 4.8 |
| Tensile shear strength (10 min curing) [mPa] | <0.1 | >0.1 | 0.13 | 0.05 | 0.12 |
| Tensile shear strength (40 min curing) [mPa] | <2.0 | <2.0 | 2.50 | 1.78 | 3.23 |

**Table 8: Experimental results of compositions C-6 to C-10 and C-21.**

| **Composition** | **C-6** | **C-7** | **C-8** | **C-9** | **C-10** | **C-21** |
|---|---|---|---|---|---|---|
| Component **A** | A-6 | A-7 | A-8 | A-9 | A-10 | A-21 |
| Component **B** | B-1 | | | | | |
| Mixing ratio A:B (w/w) | 1:10 | | | | | |
| Molar ratio SH:Bi | 78.7 | 78.7 | 16.2 | 8.0 | 8.5 | 7.7 |

| *Freshly prepared sample* | | | | | | |
|---|---|---|---|---|---|---|
| Pot life [min] | 4 | 4.4 | 6 | 4.5 | 5 | 5 |
| Tensile shear strength (10 min curing) [mPa] | 0.27 | 0.15 | 0.14 | 0.48 | 0.35 | 0.44 |
| Tensile shear strength (40 min curing) [mPa] | 2.12 | 2.21 | 3.16 | 3.35 | 3.18 | 3.59 |

| *Thermally aged sample (1 week at 60°C)* | | | | | | |
|---|---|---|---|---|---|---|
| Pot life [min] | 4 | 4.4 | >9 | >4 | 5 | 5.5 |
| Tensile shear strength (10 min curing) [mPa] | 0.21 | 0.14 | 0.05 | 0.02 | 0.43 | 0.06 |
| Tensile shear strength (40 min curing) [mPa] | 2.03 | 2.01 | 0.20 | 0.03 | 3.35 | 2.88 |

**Table 9: Experimental results of compositions C-11 to C-15. * not according to the invention.**

| **Composition** | **C-11** | **C-12** | **C-13** | **C-14** | **C-15 *** |
|---|---|---|---|---|---|
| Component **A** | A-11 | A-12 | A-13 | A-14 | A-15 |
| Component **B** | B-1 | | | | |
| Mixing ratio A:B (w/w) | 1:10 | | | | |
| Molar ratio SH:Bi | 7.7 | 7.7 | 7.7 | 7.7 | 3.1 |

| *Freshly prepared sample* | | | | | |
|---|---|---|---|---|---|
| Pot life [min] | 4.7 | 4.5 | 4.0 | 4.5 | 3.0 |
| Tensile shear strength (10 min curing) [mPa] | 0.27 | 0.36 | 0.43 | 0.48 | 0.04 |
| Tensile shear strength (40 min curing) [mPa] | 3.43 | 2.87 | 2.33 | 2.56 | 0.73 |

**Table 10: Experimental results of compositions C-16 to C-20. * not according to the invention.**

| **Composition** | **C-16** | **C-17 *** | **C-18** | **C-19** | **C-20** |
|---|---|---|---|---|---|
| Component **A** | A-16 | A-17 | A-18 | A-19 | A-20 |
| Component **B** | B-1 | | | | |
| Mixing ratio A:B (w/w) | 1:10 | | | | |
| Molar ratio SH:Bi | 7.7 | 7.7 | 7.7 | 7.7 | 7.7 |

| *Freshly prepared sample* | | | | | |
|---|---|---|---|---|---|
| Pot life [min] | 4.0 | 5.3 | 4.0 | 5.3 | 5.0 |
| Tensile shear strength (10 min curing) [mPa] | 0.33 | 0.04 | 0.79 | 0.1 | 0.22 |
| Tensile shear strength (40 min curing) [mPa] | 3.31 | 0.86 | 2.83 | 2.21 | 2.22 |

Tables 7 to 10 show that only the compositions according to the invention are able to achieve a pot life of at least 4 min while at the same time exhibiting a tensile shear strength, determined according to DIN EN 1465, of at least 0.1 mPa after 10 min of curing and at least 2 mPa after 40 min of curing. In preferred embodiments, these values are even achieved after artificial ageing of the components by storing them for 1 week at 60°C, thus proving excellent storage stability.

## Claims

1. A polyurethane composition consisting of a first and a second component; wherein
- the first component **A** comprises
- at least one polyol **A1** having an average OH functionality of more than 2, preferably in the range from 3 to 6, and a number average molecular weight Mₙ in the range from 250 to 15'000 g/mol; and
- at least one compound **T** that has at least one thiol group; and
- the second component **B** comprises
- at least one polyisocyanate **I;**
wherein one of the two components additionally comprises at least one metal catalyst **K** for the reaction of hydroxyl groups and isocyanate groups that is able to form thio complexes; and
the molar ratio of all the thiol groups in the at least one compound **T** to all metal atoms in the at least one metal catalyst **K** is between 1:1 and 250:1;
**characterized in that**
compound **T** comprises or consists of a compound having only one thiol group; and
polyisocyanate **I** comprises a polyurethane polymer **PU** containing isocyanate groups; and
component **B** exhibits a total isocyanate content of between 100 and 400 mmol NCO per kilogram of component **B.**

2. The polyurethane composition as claimed in claim 1, **characterized in that** the metal catalyst **K** comprises a bismuth(III) or a tin(IV) compound.

3. The polyurethane composition as claimed in any of claims 1 or 2, **characterized in that** the **characterized in that** the polyol **A1** comprises at least one polyether polyol, in particular at least one ethylene glycol-terminated polyether polyol.

4. The polyurethane composition as claimed in any of claims 1 to 3, **characterized in that** the at least one compound **T** is selected from alkyl monothiols and/or monothiol compounds having a carboxylic ester group.

5. The polyurethane composition as claimed in any of claims 1 to 4, **characterized in that** the at least one compound **T** does neither contain ether groups nor silane groups.

6. The polyurethane composition as claimed in claim 4, **characterized in that** the at least one compound **T** comprises or consist of one or more compounds selected from aliphatic monothiols, in particular 1-decanthiol and 1-dodecanthiol, and 3-mercaptopropionic acid alkyl esters and thioglycolic acid alkyl esters, in particular 2-ethylhexyl thioglycolate, 2-ethylhexyl-3-mercaptopropionate, and isooctyl thioglycolate.

7. The polyurethane composition as claimed in any of the preceding claims, **characterized in that** the molar ratio of all the thiol groups in the at least one compound **T** to all metal atoms in the at least one metal catalyst **K** is between 5:1 and 80:1.

8. The polyurethane composition as claimed in any of the preceding claims, **characterized in that** the metal catalyst **K** is present in the first component **A.**

9. The polyurethane composition as claimed in any of the preceding claims , **characterized in that** said polyol **A1** is a mixture of a first polyol **A1a** having an average OH-functionality of between 2 and 3 and a second polyol **A1b** having an average OH-functionality of more than 3, wherein the weight ratio of polyol **A1a** to polyol **A1b** is in the range of 10:1 to 2:1, preferably 9:1 to 3:1.

10. The polyurethane composition as claimed in claim 9, **characterized in that** said polyol **A1a** has a number average molecular weight Mₙ in the range from 2'500 to 10'000 g/mol, and said polyol **A1b** has a number average molecular weight Mₙ in the range from 250 to 1'000 g/mol.

11. The polyurethane composition as claimed in any of the preceding claims, **characterized in that** the polyurethane polymer **PU** containing isocyanate groups in polyisocyanate **I** is obtained from a reaction of at least one polyether polyol and diphenylmethane 4,4'-, 2,4'- and/or 2,2'-diisocyanate (MDI).

12. The polyurethane composition as claimed in claim 11, **characterized in that** said polyether polyol for the production of said polyurethane polymer **PU** containing isocyanate groups is a mixture of a polyether diol and a polyether triol.

13. A process for bonding a first substrate to a second substrate, comprising the steps of:
- mixing the first and second components of a polyurethane composition as claimed in any of claims 1 to 12,
- applying the mixed polyurethane composition to at least one of the substrate surfaces to be bonded,
- joining the substrates to be bonded within the open time,
- curing the polyurethane composition.

14. An article resulting from the bonding process as claimed in claim 13.

15. The use of a polyurethane composition as claimed in any of claims 1 to 12 as structural adhesive for bonding two substrates, in particular as an assembly adhesive or a direct glazing adhesive.
